# EUROPEAN PATENT SPECIFICATION

(11) **EP 2 830 282 B1**
(45) Date of publication and mention of the grant of the patent: **15.03.2017**
(21) Application number: 12871726.1
(22) Date of filing: 21.05.2012
(51) Int. Cl.: G06F 21/62, H04L 29/08

(54) **STORAGE METHOD, SYSTEM AND APPARATUS**
SPEICHERVERFAHREN, -SYSTEM UND -VORRICHTUNG
PROCÉDÉ, SYSTÈME ET APPAREIL DE STOCKAGE

(30) Priority: 19.03.2012 CN 201210073799
(43) Date of publication of application: 28.01.2015
(73) Proprietor: SURCLOUD CORP., Union City, CA 94587 (US)
(72) Inventor: WANG, Donglin, Tianjin 300308 (CN)
(74) Representative: Hanna, Peter William Derek
(86) International application number: PCT/CN2012/075793
(87) International publication number: WO 2013/139079

(56) References cited:
- WO-A1-2011/076463
- WO-A2-01/86396
- CN-A- 1 832 398
- CN-A- 101 989 984
- US-A1- 2002 194 209
- US-A1- 2008 235 521
- US-A1- 2009 313 483
- US-A1- 2010 325 732
- "Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1 October 1996 (1996-10-01), XP001525013, ISBN: 978-0-8493-8523-0 Retrieved from the Internet: URL:http://www.cacr.math.uwaterloo.ca/hac/

## Description

### FIELD OF THE INVENTION

The present invention relates to storage technology, and particularly, to a storage method, system and apparatus.

### BACKGROUND OF THE INVENTION

Cloud storage (includes public cloud and private cloud) has been more and more of a trend. Cloud storage indicates a system that collects massive amounts of different storage devices on the Internet and makes them work together by using application software with functions such as cluster application, grid technology, or distributed file systems, for the purpose of offering data storage and business access services.

To a cloud storage service provider, when massive amounts of users are uploading massive amounts of data, the uploading of duplicate files will not be actually accepted in order to optimize the utility of the storage space. For example, when User 1 has stored a File B, if another file to be uploaded by User 2 to the storage is found to be the same File B in the scan before the uploading, the file from User 2 will not be actually uploaded and the existing File B will be simply added into User 2's account.

In the prior art, in order to ensure that the second user can access the file normally when the same file is added into the second user's account, the common practice is encrypting the file with a symmetric key and saving the key in the server for long-term use. If asymmetric keys are adapted to the encryption, the service provider must have knowledge of the personal key or the service provider will not be able to give the access authorization of the file to the second user. That is, since the cloud storage service provider needs to authorize the second user (which has the same file) to access the file, the service provider must be able to recognize the file (recognize the unencrypted file or possess the decryption key to the file), hence technically the service provider (and its staff) is able to access the unencrypted contents saved by users and ethics are the only thing restricting the service provider. For example, the staff of Dropbox, which states that files stored on it are safe, are able to view the contents of the files saved by users (even when the files are stored in encrypted mode, because the service provider has the knowledge of the encryption rules and decryption keys so as to provide the files to other users).

The relevant state of the art is represented by WO 01/86396 A2, US 2002/194209 A1, WO 2011/076463 A1 and US 2009/313483 A1. Documents WO 01/86396 A2, WO 2011/076463 A1 and US 2009/313483 A1 disclose different methods for efficient secure cloud storage. Document US 2009/313483 A1 discloses an encryption method where each block of data is encrypted using a hash of the block as the encryption key.

In view of the above, a new technology is needed to prevent saving duplicate files while ensuring that unencrypted data cannot be accessed by other users even cloud storage service providers.

### SUMMARY OF THE INVENTION

The present teaching provides a method as detailed in claim 1. Also provided is a system according to claim 8 and an apparatus according to claim 11. Advantageous features are provided in dependent claims.

In view of the above, the present invention provides a storage method, system and apparatus to prevent saving duplicate files while ensuring that file cannot be accessed as unencrypted data by other users even the cloud storage service providers.

By using the technical scheme of the present invention, duplicate data will not be stored repeatedly, each data is encrypted using a storage key and only the user that owns the same data will be authorized to access the storage key. Since the storage key is further encrypted with two different encryption methods to generate a personal key and a data key respectively, the third party that actually owns the same data can use the data itself to decrypt the data key to obtain the storage key and then encrypt the storage key again with an encryption key of the third party to generate a personal key of the third party, so as to access the data with the personal key in the future. The whole procedure ensures that only the party that actually owns the same data will be authorized to access the storage key and the storage service provider will have no way to access the unencrypted data or storage key throughout the entire procedure.

### BRIEF DESCRIPTION OF THE DRAWINGS

Fig.1 is a flow chart of a storage method provided in the embodiment of the present invention;
Fig.2 is another flow chart of a storage method provided in the embodiment of the present invention;
Fig.3 is yet another flow chart of a storage method provided in the embodiment of the present invention;
Fig.4 is a schematic diagram illustrating the structure of the storage system provided in the embodiment of the present invention;
Fig.5 is another schematic diagram illustrating the structure of the storage system provided in the embodiment of the present invention.

### DETAILED DESCRIPTION OF THE INVENTION

The present invention is further described in detail hereinafter with preference to the accompanying drawings as well as embodiments so as to make the objective, technical scheme and merits thereof more apparent.

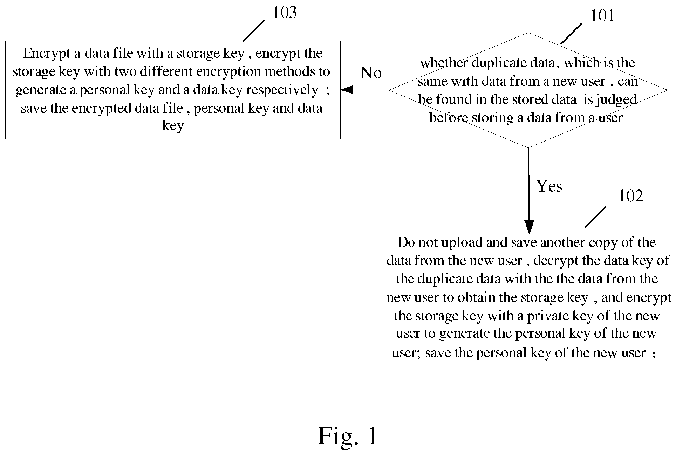

Fig.1 is a flow chart of a storage method provided in the embodiment of the present invention. In this embodiment, data is stored after being encrypted with a storage key; and the storage key is further encrypted with two different encryption methods to generate a personal key and a data key respectively, wherein the personal key can be decrypted by a key of a user who owns the data to obtain the storage key and the data key can be decrypted by the unencrypted data to obtain the storage key; finally, the encrypted data, personal key and data key are saved. The method detailed comprises:
Step 101: before storing data from a new user, judge whether any of stored data is the same with the data to be uploaded; if yes, execute Step 102; otherwise execute Step 103;
Step 102: Do not upload and save another copy of the data from the new user, decrypt the data key of the data same with the unencrypted data to be uploaded to obtain the storage key, and encrypt the storage key with a private key of the new user to generate the personal key of the new user; save the personal key of the new user, and then terminate the process.

Step 103: encrypt the data with a storage key, encrypt the storage key with two different encryption methods to generate a personal key and a data key respectively, and the methods are same as disclosed above; save the encrypted data, personal key and data key; then terminate the process.

Before data is uploaded by a new user, it is judged whether there already exists duplicate data in the cloud. When there already exists duplicate data, the data file is used to decrypt a data key to obtain a storage key, and then a private key of the user is used to encrypt the storage key to obtain a personal key of the user. When accessing the data in the future, the user uses his/her private key to decrypt the personal key and obtain the storage key, and then obtain the unencrypted contents of the data by using the storage key. In this way, storing duplicate data in the server can be prevented and also the storage service provider itself (its staff) is unable to access the unencrypted content of the data.

In another embodiment of the present invention, the server judges duplicate data based on the HASH values of the data, for example, two files will be regarded as the duplicate of each other if the two files have the same HASH values. Therefore the HASH values of all data will be saved in the server side and the HASH value of data to be stored will be calculated before the file is stored so that the server can judge whether a duplicate of the data already exists. Obviously those skilled in the art may use other methods to judge whether files are duplicates and the present invention does not limit the judgment method.

In another embodiment of the present invention, there is a client on the user side; when the server side judges that there already exists duplicate data in the server, the data key of the data on the server will be sent to the client side; the client side decrypts the data key received with the unencrypted data at its own side to obtain the storage key; the client side also uses a key of the new user to encrypt the storage key to generate the personal key of the new user and sends the personal key of the new user to the server for storage.

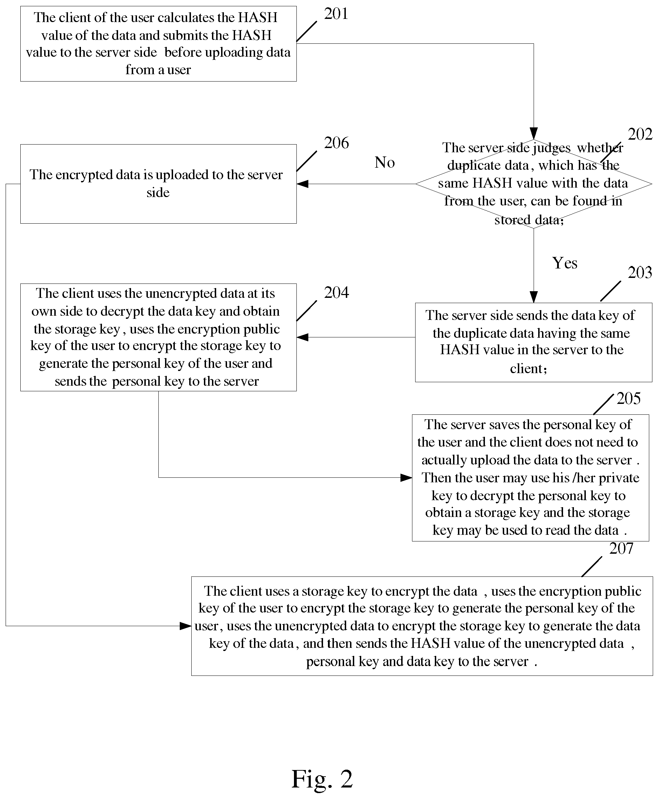

Fig.2 shows a practical example of the embodiment.

Fig.2 shows a storage method provided in the embodiment of the present invention. In this embodiment, HASH values are utilized to recognize duplicate files; a user's public key is used to encrypt the storage key to obtain a personal key for the user, a private key of the user is used to decrypt the personal key to obtain the storage key. Meanwhile, a data key is obtained through asymmetric encryption of the storage key by using the data itself. As shown in Fig.2, the procedure mainly includes following steps.

Step 201: before uploading data from a user, the client side of the user calculates the HASH value of the data and submits the HASH value to the server side.

Step 202: the server side judges whether any of stored data in the server has the same HASH value; if yes, execute Step 203; if no, execute Step 206.

Step 203: the server side sends the data key of the data having the same HASH value in the server to the client side.

Step 204: the client side uses the unencrypted data at its own side to decrypt the data key and obtain the storage key, uses the public key of the user to encrypt the storage key to generate the personal key of the user and sends the personal key to the server.

Step 205: the server saves the personal key of the user and the client side does not need to actually upload the data to the server. Then the user may use his/her private key to decrypt the personal key to obtain a storage key and the storage key may be used to read the data. The process will then be terminated.

Step 206: the encrypted data is uploaded to the server side.

Step 207: the client side uses a storage key to encrypt the data, uses the public key of the user to encrypt the storage key to generate the personal key of the user, uses the unencrypted data to encrypt the storage key to generate the data key of the data, and then sends the HASH value of the unencrypted data, personal key and data key to the server. The process will then be terminated.

The technical scheme above ensures that duplicate data will not be stored repeatedly and, furthermore, duplicate data will not be uploaded repeatedly. Meanwhile, only the users who actually have the same unencrypted data can obtain the storage key and access the data. The storage service provider and other users cannot obtain the storage key or unencrypted data, hence, compared to the data security in the prior art, the data security is enhanced.

When in practical use, high security scheme must result in a certain amount of sacrifice of processing efficiency. Therefore, a storing method is provided by another embodiment of the present invention, wherein, the usability is improved comparing with the above embodiment, although the security is weakened a little.

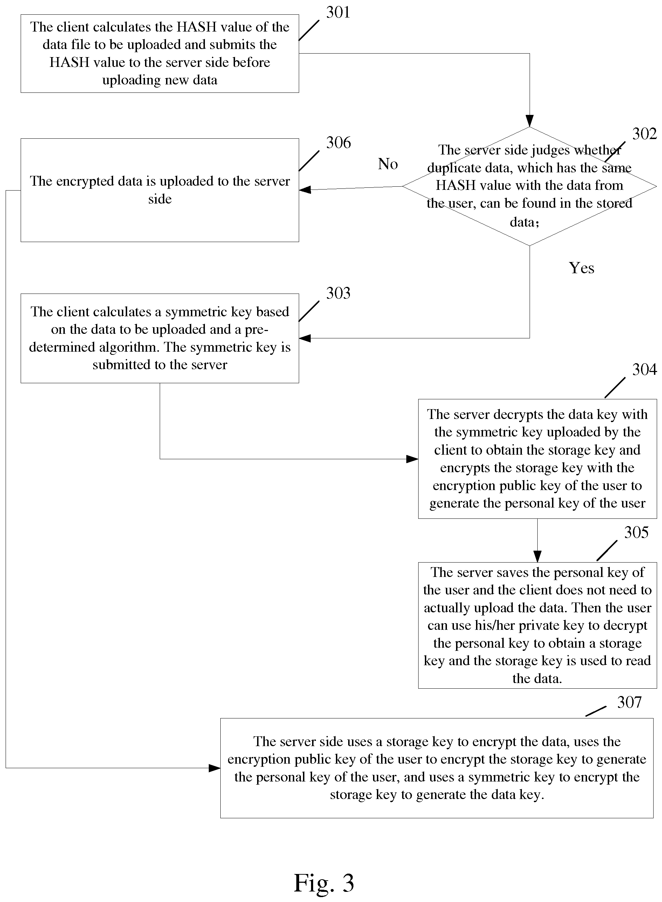

In another embodiment of the present invention, when the server side determines that duplicates of the data to be uploaded exist in the stored data, the server side will inform the client side and the client side will calculate a decryption key adopted to decrypt the data key to obtain the storage key, based on the data to be uploaded and a pre-determined algorithm, and then send the decryption key for the data key to the server. The server decrypts the data key with the decryption key uploaded by the client to obtain the storage key; then a key of the user is used to encrypt the storage key to generate the personal key of the user. Fig.3 shows a practical example of the embodiment.

Fig.3 shows a storage method provided in another embodiment of the present invention. In this embodiment, symmetric keys are calculated based on the data to be uploaded and a pre-determined algorithm for encrypting the storage key to obtain the data key or decrypting the data key to obtain the storage key. As shown in Fig.3, the procedure mainly includes the following steps.

Step 301: before uploading new data, the client side calculates the HASH value of the data to be uploaded and submits the HASH value to the server side.

Step 302: the server side judges whether any of stored data in the server has the same HASH value with the data to be uploaded; if yes, execute Step 303, if no, execute Step 306.

Step 303: the client side calculates a symmetric key based on the data to be uploaded and a pre-determined algorithm. The symmetric key is submitted to the server.

Step 304: the server decrypts the data key with the symmetric key uploaded by the client side to obtain the storage key and encrypts the storage key with the public key of the user to generate the personal key of the user.

Step 305: the server saves the personal key of the user and the client side does not need to actually upload the data. Then the user can use his/her private key to decrypt the personal key to obtain a storage key and the storage key is used to read the data. The process will then be terminated.

Step 306: the encrypted data is uploaded to the server side.

Step 307: the server side uses a storage key to encrypt the data, uses the public key of the user to encrypt the storage key to generate the personal key of the user, and uses a symmetric key to encrypt the storage key to generate the data key. The process will then be terminated.

The technical scheme of this embodiment also ensures that duplicate data will not be stored repeatedly and duplicate data will not be uploaded repeatedly. In this embodiment, the storage service provider is able to hold the storage key for a short period, but compared to the prior art in which the storage key is saved on the server side permanently, this embodiment of the present invention provides highly enhanced security.

In an embodiment of the present invention, the symmetric key for the generation and decryption of the data key is calculated by extracting data from specific location in the data, or by calculating the HASH value of the data by using a special HASH algorithm, such as calculating HASH value of the data plus a fixed string.

In another embodiment of the present invention, there is no client on the user side, e.g., a user may upload files through web browser, in which it hard for the user side to calculate the HASH value of data to be uploaded and submits the value to the server side. Therefore, the server needs to obtain the unencrypted data temporarily and then follows the methods shown in the previous embodiments: calculates the HASH value, judges whether duplicate data exist, uses the unencrypted data to decrypt the data key and obtain the storage key, and uses a key from the user to encrypt the storage key to generate a personal key, then removes unencrypted data and storage key. Such an approach cannot reduce duplicate uploading, but can reduce duplicate storing copies of same file.

An embodiment of the present invention also provides a storage system, includes a processor coupled to a memory storing instructions for execution by the processor, and further includes:
First Encryption Module 1001, adapted to encrypt data with a storage key and encrypt the storage key with two different encryption methods to generate a personal key and a data key respectively; wherein, the personal key can be decrypted by a private key of a user who owns the data to obtain the storage key and the data key can be decrypted by the data unencrypted to obtain the storage key
Storage Module 1002, adapted to save the encrypted data, personal key and data key;
Judgment Module 1003, adapted to judge whether any of the stored data is the same with data from a new user before storing the data from the new user;
Key Authorization Module 1004, adapted to decrypt the data key of the duplicate data with the data from the new user to obtain the storage key, when the judgment module returns a positive judgment, and encrypt the storage key with the private key of the new user to generate the personal key of the new user.

In another embodiment of the present invention, the system further includes a client, wherein the client includes:
Decryption Module 1005, adapted to receive the data key of the duplicate data from the server and decrypt the data key with the unencrypted data to obtain the storage key;
Second Encryption Module 1006, adapted to encrypt the storage key with the private key of the new user to generate the personal key of the new user and send the personal key of the new user to the server for storage; and
At this situation, the Key Authorization Module 1004 on the server side includes:
   Transmitter Sub-Module 1041, adapted to send the data key of the duplicate data to the client when the judgment result from the judgment module 1003 is positive; and
   Receiver Sub-Module 1042, adapted to receive the personal key of the new user from the client and send the personal key to the Storage Module 1002 for storage.

In another embodiment of the present invention, the client includes:
Key Generation Module 1007, adopted to calculate a decryption key of the data key based on the data itself and the pre-determined algorithm when the judgment result from the Judgment Module 1003 is positive;
and the Key Authorization Module 1004 on the server side includes:
   Decryption key Receiver Sub-Module 1043, adapted to receive from the client the decryption key of the data key, which is calculated based on the data itself and the pre-determined algorithm;
   Encryption/Decryption Sub-Module 1044, adapted to decrypt the data key with the decryption key uploaded by the client to obtain the storage key and encrypt the storage key with the private key of the new user to generate the personal key of the new user.

In another embodiment of the present invention, the above client side may include:
HASH Value Calculation Module 1008, adapted to calculate the HASH value of the data from the new user and upload the HASH value to the server so that the server can judge whether any of the data stored already has an identical HASH value.

The above Storage Module 1002 is further adapted to store HASH value of stored data.

The structure schematics of the storage system described in embodiments of the present invention are explained further below by using two detailed embodiments.

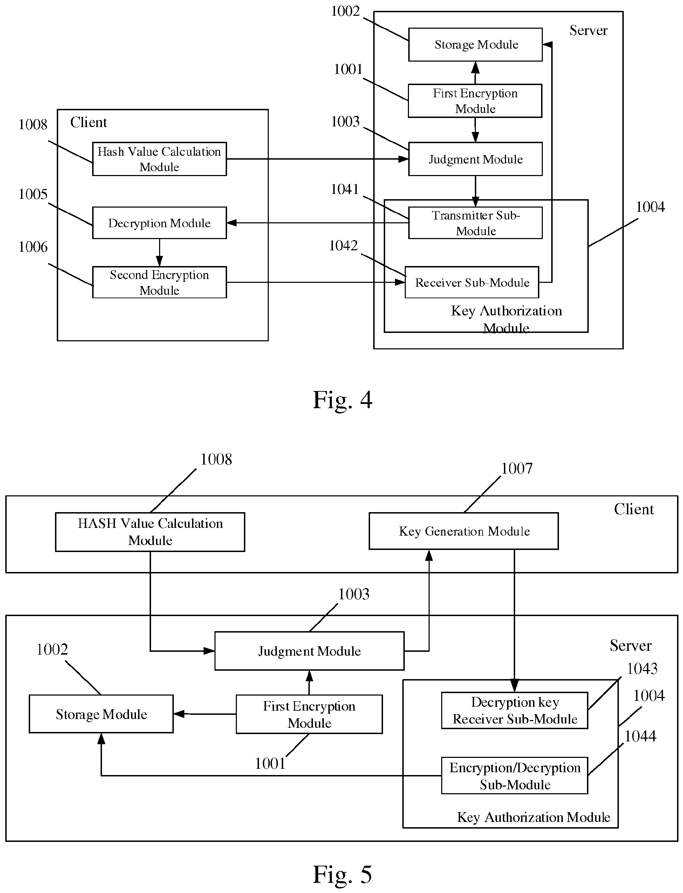

Fig.4 is another schematic diagram illustrating the structure of the storage system provided in the embodiment of the present invention. As shown in Fig.4, the system includes a client side and a server side, wherein the client side includes HASH Value Calculation Module 1008, Decryption Module 1005 and Second Encryption Module 1006; and the server side includes First Encryption Module 1001, Storage Module 1002, Judgment Module 1003 and Key Authorization Module 1004, wherein, the Key Authorization Module 1004 includes Transmitter Sub-Module 1041 and Receiver Sub-Module 1042.

The specific usage and functions of the modules and sub-modules are given in the description of previous embodiments.

Fig.5 is another schematic diagram illustrating the structure of the storage system provided in the embodiment of the present invention. As shown in Fig.5, the system includes a client side and a server side,
wherein the client side includes HASH Value Calculation Module 1008 and Key Generation Module 1007; and the server side includes First Encryption Module 1001, Storage Module 1002, Judgment Module 1003 and Key Authorization Module 1004, and wherein, the Key Authorization Module 1004 includes of Decryption Key Receiver Sub-Module 1043 and Encryption/Decryption Sub-Module 1044.

The specific usage and functions of the modules and sub-modules are given in the description of previous embodiments.

In another embodiment of the present invention, there is no client on the user side, therefore all the modules in the embodiments above may be located on the server side.

The present invention also provides a storage apparatus, which is the server described in the above embodiment. The invention is defined only by the scope of the appended claims.

## Claims

1. A storage method, which comprising:
storing, by a server side, data after encrypting the data with a storage key;
encrypting (103), by the server side, the storage key with two different encryption methods to generate a personal key and a data key respectively; wherein the personal key can be decrypted by a private key of a user who owns the data to obtain the storage key and the data key can be decrypted by the data unencrypted to obtain the storage key;
saving, by the server side, the encrypted data, personal key, data key and the HASH value of the data;
receiving, by the server side, the HASH value of data from a new user (201) and judging (202), by a server side, whether the data from the new user has the same HASH value with any of the stored data, before storing (206) the data from the new user;
not uploading, by a client side, the data from the new user when duplicate data, which has the same HASH value with the data from a new user, has been found in the stored data, decrypting (204), by the server side or the client side, the data key of the duplicate data with the data from the new user to obtain the storage key, and encrypting (204), by the server side or the client side, the storage key with a public key of the new user to generate a personal key of the new user.

2. The method of Claim 1, further comprising:
decrypting (205) the personal key by a private key of the new user to obtain the storage key and decrypting the encrypted data by the storage key to obtain the data, when the new user accesses his/her data.

3. The method of any one of Claim 1-2, wherein, decrypting the data key of the duplicate data with the data from the new user to obtain the storage key, and encrypting the storage key with a public key of the new user to generate a personal key of the new user comprises:
sending (203) the data key of the duplicate data to the client; wherein, the client decrypts (204) the data key received with unencrypted data at its own side to obtain the storage key, uses the public key of the new user to encrypt the storage key to generate the personal key of the new user and sends the personal key of the new user to the server for storage.

4. The method of any one of Claim 1-2, wherein, decrypting (204) the data key of the duplicate data with the data from the new user to obtain the storage key, and encrypting the storage key with a public key of the new user to generate a personal key of the new user comprises:
receiving a decryption key calculated by the client to decrypt the data key based on the data from the new user and a pre-determined algorithm;
decrypting the data key with the decryption key uploaded by the client to obtain the storage key; encrypting the storage key to generate the personal key of the new user by using the public key of the new user.

5. The method of Claim 4, wherein receiving a decryption key calculated by the client to decrypt the data key based on the data from the new user and a pre-determined algorithm comprises:
calculating the decryption key by extracting data from specific locations in the data from the new user, or
calculating the decryption key by calculating the special HASH value of the data from the new user.

6. The method of any one of Claim 1-2, further comprising:
encrypting (207) the storage key by using the new user's public key to obtain the personal key of the new user;
decrypting (205) the personal key by using the private key of the new user to obtain the storage key.

7. The method of any one of Claim 1-2, further comprising:
symmetrically (303,304) encrypting the data key with unencrypted data to obtain a new data key (307).

8. A storage system, comprising a server side and a client side, wherein the server side comprises:
an encryption module (1001), adapted to encrypt data with a storage key and encrypt the storage key with two different encryption methods to generate a personal key and a data key respectively; wherein, the personal key can be decrypted by a private key of a user who owns the data to obtain the storage key and the data key can be decrypted by the data unencrypted to obtain the storage key;
a storage module (1002), adapted to save the encrypted data, personal key, data key and the HASH value of the data;
a judgment module (1003), adapted to receive the HASH value of data from a new user and judge whether the data from the new user has the same HASH value with any of the stored data before the data from the new user is stored;
a key authorization module (1004), comprising: a transmitter sub-module (1041), adapted to send the data key of the duplicate data to the client when the judgment result from the judgment module (1003) is positive; a receiver sub-module (1042), adapted to receive a personal key of the new user from the client and send the personal key to the storage module (1002) for storage;
wherein the client side comprises:
a decryption module (1005), adapted to receive the data key of the duplicate data from the server and decrypt the data key with the unencrypted data to obtain the storage key;
a second encryption module (1006), adapted to encrypt the storage key with a public key of the new user to generate the personal key of the new user and send the personal key of the new user to the server for storage.

9. The system of Claim 8, wherein the client side further comprises:
a key generation module (1007), adapted to calculate a decryption key of the data key based on the data itself and the pre-determined algorithm when the judgment result from the judgement module (1003) is positive;
at this situation, the key authorization module (1004) further comprises:
a decryption key receiver sub-module (1043), adapted to receive from the client the decryption key of the data key, which is calculated based on the data itself and the pre-determined algorithm;
an encryption/decryption sub-module (1044), adapted to decrypt the data key with the decryption key uploaded by the client to obtain the storage key and encrypt the storage key with the public key of the new user to generate the personal key of the new user.

10. The system of Claim 8 or 9, wherein, the client further comprises:
a HASH value calculation module, adapted to calculate the HASH value of the data from the new user and upload the HASH value to the server so that the judgement module (1003) of the server can judge whether any of the data stored already has an identical HASH value.

11. A storage apparatus, comprising:
an encryption module (1001), adapted to encrypt data with a storage key and encrypt the storage key with two different encryption methods to generate a personal key and a data key respectively; wherein, the personal key can be decrypted by a key of a user who owns the data to obtain the storage key and the data key can be decrypted by the data unencrypted to obtain the storage key;
a storage module (1002), adapted to save the encrypted data, personal key, data key and the HASH value of the data;
a judgement module (1003), adapted to receive the HASH value of data from a new user and judge whether the data from the new user has the same HASH value with any of the stored data, before the data from the new user is stored;
a key authorization module (1004), adapted to decrypt the data key of the duplicate data to obtain the storage key when the judgement module (1003) returns a positive judgment, and encrypt the storage key with a public key of the new user to generate the personal key of the new user.

12. The apparatus of Claim 11, wherein, the key authorization module (1004) comprises: a receiver sub-module (1042), adapted to receive the personal key of the new user from the client and send the personal key to the storage module (1002) for storage; or wherein, the key authorization module (1004) comprises:
a decryption key receiver sub-module (1043), adapted to receive from the client the decryption key of the data key, which is calculated based on the data itself and the pre-determined algorithm;
an encryption/decryption sub-module (1044), adapted to decrypt the data key with the decryption key uploaded by the client to obtain the storage key and encrypt the storage key with the public key of the new user to generate the personal key of the new user.

## Patentansprüche

1. Eine Speichermethode, die folgende Vorgänge umfasst:
Speichern von Daten auf Serverseite, nachdem die Daten mit einem Speicherschlüssel verschlüsselt wurden;
Verschlüsseln (103) des Speicherschlüssels mithilfe zweier unterschiedlicher Verschlüsselungsmethoden auf Serverseite, die jeweils einen persönlichen Schlüssel und einen Datenschlüssel erzeugen; wobei der persönliche Schlüssel mit dem privaten Schlüssel eines Nutzers, der die Daten besitzt, zum Erhalt des Speicherschlüssels entschlüsselt und der Datenschlüssel zum Erhalt des Speicherschlüssels mit den unverschlüsselten Daten entschlüsselt werden kann;
Speichern der verschlüsselten Daten, des persönlichen Schlüssels, des Datenschlüssels und des HASH-Wertes der Daten auf Serverseite;
Empfangen des HASH-Wertes der Daten von einem neuen Nutzer (201) auf Serverseite und Beurteilen (202) auf Serverseite, ob die Daten vom neuen Nutzer denselben HASH-Wert besitzen wie die gespeicherten Daten, bevor die Daten vom neuen Nutzer gespeichert (206) werden;
Kein Upload der Daten von einem neuen Nutzer auf Client-Seite, wenn Datenduplikate, die denselben HASH-Wert besitzen wie die Daten vom neuen Nutzer, in den gespeicherten Daten festgestellt wurden, Entschlüsseln (204) des Datenschlüssels der Datenduplikate mit den Daten vom neuen Nutzer zum Erhalt des Speicherschlüssels auf Server- oder Client-Seite und Verschlüsseln (204) des Datenschlüssels mit einem öffentlichen Schlüssel des neuen Nutzers auf Server- oder Client-Seite, um einen persönlichen Schlüssel des neuen Nutzers zu erzeugen.

2. Das Verfahren von Anspruch 1 umfasst zudem die folgenden Vorgänge:
Verschlüsseln (205) der persönlichen Schlüssels mit einem privaten Schlüssel des neuen Nutzers zum Erhalt des Speicherschlüssels und Entschlüsseln der verschlüsselten Daten mit dem Speicherschlüssel zum Erhalt der Daten, wenn der neuen Nutzer auf seine Daten zugreift.

3. Das Verfahren der Ansprüche 1-2 umfasst den folgenden Vorgang, wobei der Datenschlüssel der Datenduplikate mit den Daten vom neuen Nutzer zum Erhalt des Speicherschlüssels entschlüsselt und der Speicherschlüssel mit einem öffentlichen Schlüssel des neuen Nutzers zur Erzeugung eines persönlichen Schlüssel des neuen Nutzers verschlüsselt wird:
Senden (203) des Datenschlüssels der Datenduplikate an den Client; wobei der Client den empfangenen Datenschlüssel mit den unverschlüsselten Daten auf seiner eigenen Seite zum Erhalt des Speicherschlüssels entschlüsselt (204), den öffentlichen Schlüssel des neuen Nutzers zur Erzeugung des persönlichen Schlüssels des neuen Nutzers verwendet und den persönlichen Schlüssel des neuen Nutzers an den Server zum Speichern sendet.

4. Das Verfahren der Ansprüche 1-2 umfasst die folgenden Vorgänge, wobei der Datenschlüssel der Datenduplikate mit den Daten vom neuen Nutzer zum Erhalt des Speicherschlüssels entschlüsselt (204) und der Speicherschlüssel mit einem öffentlichen Schlüssel des neuen Nutzers zur Erzeugung eines persönlichen Schlüssel des neuen Nutzers verschlüsselt wird:
Empfangen eines Entschlüsselungsschlüssels, der vom Client auf Basis der Daten vom neuen Nutzer und eines vorgegebenen Algorithmus zur Entschlüsselung des Datenschlüssels berechnet wird;
Entschlüsseln des Datenschlüssels mit dem vom Client zum Erhalt des Speicherschlüssels hochgeladenen Entschlüsselungsschlüssel; Verschlüsseln des Speicherschlüssels zur Erzeugung des persönlichen Schlüssels des neuen Nutzers bei Verwendung des öffentlichen Schlüssels des neuen Nutzers.

5. Das Verfahren von Anspruch 4 umfasst die folgenden Vorgänge, wobei ein Entschlüsselungsschlüssel empfangen wird, der vom Client auf Basis der Daten vom neuen Nutzer und eines vorgegebenen Algorithmus zur Entschlüsselung des Datenschlüssels berechnet wird:
Berechnen des Entschlüsselungsschlüssels durch Extrahieren von Daten von bestimmten Speicherorten in den Daten des neuen Nutzers oder
Berechnen des Entschlüsselungsschlüssels durch Berechnen des speziellen HASH-Wertes der Daten des neuen Nutzers.

6. Das Verfahren der Ansprüche 1-2 umfasst zudem die folgenden Vorgänge:
Verschlüsseln (207) des Speicherschlüssels zum Erhalt des persönlichen Schlüssels des neuen Nutzers bei Verwendung des öffentlichen Schlüssels des neuen Nutzers;
Entschlüsseln (205) des persönlichen Schlüssels zum Erhalt des Speicherschlüssels bei Verwendung des privaten Schlüssels des neuen Nutzers.

7. Das Verfahren der Ansprüche 1-2 umfasst zudem den folgenden Vorgang:
Symmetrisches (303,304) Verschlüsseln des Datenschlüssels mit unverschlüsselten Daten zum Erhalt 5 eines neuen Datenschlüssels (307).

8. Ein Speichersystem mit einer Server- und einer Client-Seite, wobei die Serverseite über folgende Elemente verfügt:
Ein Verschlüsselungsmodul (1001), das zur Verschlüsselung der Daten mit einem Speicherschlüssel und zur Verschlüsselung des Speicherschlüssel mithilfe zweier unterschiedlicher Verschlüsselungsmethoden zur Erzeugung jeweils einen persönlichen Schlüssel und einen Datenschlüssel vorgesehen ist; wobei der persönliche Schlüssel mit dem privaten Schlüssel eines Nutzers, der die Daten besitzt, zum Erhalt des Speicherschlüssels entschlüsselt und der Datenschlüssel zum Erhalt des Speicherschlüssels mit den unverschlüsselten Daten entschlüsselt werden kann;
Ein Speichermodul (1002), das zum Speichern der verschlüsselten Daten, des persönlichen Schlüssels, des Datenschlüssels und des HASH-Wertes der Daten vorgesehen ist;
Ein Beurteilungsmodul (1003), das zum Empfang des HASH-Wertes der Daten von einem neuen Nutzer und zur Beurteilung vorgesehen ist, ob die Daten vom neuen Nutzer denselben HASH-Wert besitzen, wie die gespeicherten Daten, bevor die Daten des neuen Nutzers gespeichert werden;
Ein Schlüsselautorisierungsmodul (1004), das aus folgenden Elementen besteht: Ein Untermodul als Sender (1041), das bei positiver Beurteilung seitens des Beurteilungsmoduls (1003) zum Senden des Datenschlüssels der Datenduplikate an den Client vorgesehen ist, ein Untermodul als Empfänger (1042), das zum Empfang eines persönlichen Schlüssels des neuen Nutzers vom Client und zum Senden des persönlichen Schlüssels an das Speichermodul (1002) zum Speichern vorgesehen ist;
wobei die Client-Seite über folgende Elemente verfügt:
Ein Entschlüsselungsmodul (1005), das zum Empfang des Datenschlüssels der Datenduplikate vom Server und zur Entschlüsselung des Datenschlüssels mit den unverschlüsselten Daten zum Erhalt des Speicherschlüssels vorgesehen ist;
Ein zweites Verschlüsselungsmodul (1006), das zur Verschlüsselung des Speicherschlüssels mit einem öffentlichen Schlüssel des neuen Nutzers vorgesehen ist, um den persönlichen Schlüssel des neuen Nutzers zu erzeugen und den persönlichen Schlüssel des neuen Nutzers an den Server zum Speichern zu senden.

9. Das System von Anspruch 8, wobei die Client-Seite zudem folgendes Element besitzt:
Ein Schlüsselerzeugungsmodul (1007), das bei positivem Beurteilungsergebnis seitens des Beurteilungsmoduls (1003) zur Berechnung eines Entschlüsselungsschlüssels des Datenschlüssels auf Basis der Daten selbst und des vorgegebenen Algorithmus vorgesehen ist;
An dieser Stelle verfügt das Schlüsselautorisierungsmodul (1004) zudem über die folgenden Elemente:
Ein Untermodul als Empfänger des Entschlüsselungsschlüssels (1043), das für den Empfang des Entschlüsselungsschlüssels des Datenschlüssels, der auf Basis der Daten selbst und des vorgegebenen Algorithmus berechnet wird, vom Client vorgesehen ist;
Ein Untermodul zur Entschlüsselung/Verschlüsselung (1044), das zur Entschlüsselung des Datenschlüssels mit dem Entschlüsselungsschlüssel vorgesehen ist, den der Client zum Erhalt des Speicherschlüssels und zur Verschlüsselung des Speicherschlüssels mit dem öffentlichen Schlüssel des neuen Nutzers hochgeladen hat, um den persönlichen Schlüssel des neuen Nutzers zu erzeugen.

10. Das System von Anspruch 8 oder 9, wobei die Client-Seite zudem folgendes Element besitzt:
Ein HASH-Wert-Berechnungsmodul, das zur Berechnung des HASH-Wertes der Daten vom neuen Nutzer und für den Upload des HASH-Wertes vorgesehen ist, damit das Beurteilungsmodul (1003) des Servers beurteilen kann, ob die gespeicherten Daten bereits einen identischen HASH-Wert besitzen.

11. Ein Speichergerät, das folgende Elemente umfasst:
Ein Verschlüsselungsmodul (1001), das zur Verschlüsselung der Daten mit einem Speicherschlüssel und zur Verschlüsselung des Speicherschlüssel mithilfe zweier unterschiedlicher Verschlüsselungsmethoden zur Erzeugung jeweils eines persönlichen Schlüssels und eines Datenschlüssels vorgesehen ist; wobei der persönliche Schlüssel mit dem Schlüssel eines Nutzers, der die Daten besitzt, zum Erhalt des Speicherschlüssels entschlüsselt und der Datenschlüssel zum Erhalt des Speicherschlüssels mit den unverschlüsselten Daten entschlüsselt werden kann;
Ein Speichermodul (1002), das zum Speichern der verschlüsselten Daten, des persönlichen Schlüssels, des Datenschlüssels und des HASH-Wertes der Daten vorgesehen ist;
Ein Beurteilungsmodul (1003), das zum Empfang des HASH-Wertes der Daten von einem neuen Nutzer und zur Beurteilung vorgesehen ist, ob die Daten vom neuen Nutzer denselben HASH-Wert besitzen, wie die gespeicherten Daten, bevor die Daten des neuen Nutzers gespeichert werden;
Ein Schlüsselautorisierungsmodul (1004), das zur Entschlüsselung des Datenschlüssels der Datenduplikate vorgesehen ist, um bei positiver Beurteilung seitens des Beurteilungsmoduls (1003) den Speicherschlüssel zu erhalten, sowie zur Verschlüsselung des Speicherschlüssels mit einem öffentlichen Schlüssel des neuen Nutzers, um den persönlichen Schlüssel des neuen Nutzers zu erzeugen.

12. Das Gerät von Anspruch 11, wobei das Schlüsselautorisierungsmodul (1004) folgendes Element umfasst:
Ein Untermodul als Empfänger (1042), das für den Empfang des persönlichen Schlüssels des neuen Nutzers vom Client und zum Senden des persönlichen Schlüssels an das Speichermodul (1002) zum Speichern vorgesehen ist; oder
Wobei das Schlüsselautorisierungsmodul (1004) folgende Elemente umfasst:
Ein Untermodul als Empfänger des Entschlüsselungsschlüssels (1043), das für den Empfang des Entschlüsselungsschlüssels des Datenschlüssels, der auf Basis der Daten selbst und des vorgegebenen Algorithmus berechnet wird, vom Client vorgesehen ist;
Ein Untermodul zur Entschlüsselung/Verschlüsselung (1044), das zur Entschlüsselung des Datenschlüssels mit dem Entschlüsselungsschlüssel vorgesehen ist, den der Client zum Erhalt des Speicherschlüssels und zur Verschlüsselung des Speicherschlüssels mit dem öffentlichen Schlüssel des neuen Nutzers hochgeladen hat, um den persönlichen Schlüssel des neuen Nutzers zu erzeugen.

## Revendications

1. Une méthode de stockage, comprenant:
le stockage, par une partie serveur, des données après cryptage des données avec une clé de stockage;
le cryptage (103), par la partie serveur, de la clé de stockage avec deux procédés de cryptage différents afin de générer respectivement une clé personnelle et une clé de données ; dans lequel la clé personnelle peut être décryptée par une clé privée d'un utilisateur détenteur des données pour obtenir la clé de stockage et la clé de données peut être décryptée par les données non cryptées pour obtenir la clé de stockage;
la sauvegarde, par la partie serveur, des données cryptées, de la clé personnelle, de la clé de données et de la valeur HASH des données;
la réception, par la partie serveur, de la valeur HASH des données d'un nouvel utilisateur (201) et détermination (202), par la partie serveur, si les données du nouvel utilisateur ont la même valeur HASH que l'une des données stockées, avant stockage (206) des données du nouvel utilisateur;
le non téléversement, par une partie client, des données de nouvel utilisateur en cas de données doubles, ayant la même valeur HASH que les données d'un nouvel utilisateur, lorsqu'elles sont trouvées dans les données stockées, décryptage (204), par la partie serveur ou la partie client, de la clé de données des données doubles avec les données du nouvel utilisateur pour obtenir la clé de stockage, et cryptage (204), par la partie serveur ou la partie client, de la clé de stockage avec une clé publique du nouvel utilisateur pour générer une clé personnelle pour le nouvel utilisateur.

2. Le procédé de la revendication 1, comprenant en outre:
le décryptage (205) de la clé personnelle par une clé privée du nouvel utilisateur pour obtenir la clé de stockage et décryptage des données cryptées par la clé de stockage pour obtenir les données, lorsque le nouvel utilisateur accède à ses données.

3. Le procédé de l'une quelconque des revendications 1-2, dans lequel le décryptage de la clé de données des données doubles avec les données du nouvel utilisateur pour obtenir la clé de stockage, et le cryptage de la clé de stockage avec une clé publique du nouvel utilisateur pour générer une clé personnelle de nouvel utilisateur, comprennent:
L'envoi (203) de la clé de données des données doubles au client ; dans lequel, le client décrypte (204) la clé de données reçue avec les données non cryptées de son côté pour obtenir la clé de stockage, utilise la clé publique du nouvel utilisateur pour crypter la clé de stockage afin de générer la clé personnelle du nouvel utilisateur et envoie la clé personnelle du nouvel utilisateur au serveur pour stockage.

4. Le procédé de l'une quelconque des revendications 1-2, dans lequel, le décryptage (204) de la clé de données des données doubles avec les données du nouvel utilisateur pour obtenir la clé de stockage, et le cryptage de la clé de stockage avec la clé publique du nouvel utilisateur pour générer une clé personnelle du nouvel utilisateur comprend:
la réception d'une clé de décryptage calculée par le client afin de décrypter la clé de données basée sur les données du nouvel utilisateur et un algorithme prédéterminé;
le décryptage de la clé de données avec la clé de décryptage téléversée par le client afin d'obtenir la clé de stockage ; le cryptage de la clé de stockage pour générer la clé personnelle du nouvel utilisateur en utilisant la clé publique du nouvel utilisateur.

5. Le procédé selon la revendication 4, dans lequel la réception d'une clé de décryptage calculée par le client afin de décrypter la clé de données basée sur les données du nouvel utilisateur et un algorithme prédéterminé comprend :
le calcul de la clé de décryptage en extrayant les données d'endroits spécifiques dans les données du nouvel utilisateur, ou
le calcul de la clé de décryptage en calculant la valeur HASH spéciale des données du nouvel utilisateur.

6. Le procédé de l'une quelconque des revendications 1-2, comprenant en outre:
le cryptage (207) de la clé de stockage en utilisant la clé publique du nouvel utilisateur afin d'obtenir la clé personnelle du nouvel utilisateur;
le décryptage (205) de la clé personnelle en utilisant la clé privée du nouvel utilisateur afin d'obtenir la clé de stockage.

7. Le procédé de l'une quelconque des revendications 1-2, comprenant en outre:
le cryptage symétrique (303,304) de la clé de données avec des données non cryptées pour obtenir une nouvelle clé de données (307).

8. Un système de stockage, comprenant une partie serveur et une partie client, dans lequel la partie serveur comprend:
un module de cryptage (1001), conçu pour le cryptage de données avec une clé de stockage et pour crypter la clé de stockage à l'aide de deux procédés de cryptage différents afin de générer respectivement une clé personnelle et une clé de données ; dans lequel la clé personnelle peut être décryptée par une clé privée d'un utilisateur détenteur des données pour obtenir la clé de stockage et la clé de données peut être décryptée par les données non cryptées pour obtenir la clé de stockage;
un module de stockage (1002), conçu pour la sauvegarde des données cryptées, de la clé personnelle, de la clé de données et de la valeur HASH des données;
un module de jugement (1003), conçu pour recevoir la valeur HASH des données d'un nouvel utilisateur et déterminer si les données du nouvel utilisateur ont la même valeur HASH que l'une des données stockées, avant de stocker les données du nouvel utilisateur;
un module d'autorisation de clé (1004), comprenant : un sous-module émetteur (1041), conçu pour envoyer la clé de données des données doubles au client lorsque le résultat du module de jugement (1003) est positif ;
un sous-module récepteur (1042), conçu pour recevoir une clé personnelle du nouvel utilisateur par le client et envoyer la clé personnelle au module de stockage module (1002) pour stockage;
dans lequel la partie client comprend:
un module de décryptage (1005), conçu pour recevoir la clé de données des données doubles depuis le serveur et décrypter la clé de données avec les données non encryptées afin d'obtenir la clé de stockage;
un deuxième module de cryptage (1006), conçu pour crypter la clé de stockage avec une clé publique du nouvel utilisateur afin de générer la clé personnelle du nouvel utilisateur et envoyer la clé personnelle du nouvel utilisateur au serveur pour stockage.

9. Le système de la revendication 8, dans lequel la partie client comprend en outre:
un module générateur de clé (1007), conçu pour calculer une clé de décryptage de clé de données basée sur les données elles-mêmes et l'algorithme prédéterminé lorsque le résultat du module de jugement (1003) est positif;
le cas échéant, le module d'autorisation de clé (1004) comprend en outre :
un sous-module récepteur de clé de décryptage (1043), conçu pour recevoir du client la clé de décryptage de la clé de données, dont le calcul est basé sur les données elles-mêmes et l'algorithme prédéterminé;
un sous-module de cryptage/décryptage (1044), conçu pour décrypter la clé de données avec la clé de décryptage téléversée par le client afin d'obtenir la clé de stockage et crypter la clé de stockage avec la clé publique du nouvel utilisateur afin de générer une clé personnelle du nouvel utilisateur.

10. Le système selon la revendication 8 ou 9, dans lequel, le client comprend en outre:
un module de calcul de valeur HASH, conçu pour calculer la valeur HASH des données du nouvel utilisateur et téléverser la valeur HASH sur le serveur afin que le module de jugement (1003) du serveur puisse déterminer si l'une des données stockées dispose déjà d'une valeur HASH identique.

11. Un appareil de stockage, comprenant:
un module de cryptage (1001), conçu pour encrypter les données avec une clé de stockage et pour crypter la clé de stockage à l'aide de deux procédés de cryptage différents afin de générer respectivement une clé personnelle et une clé de données ; dans lequel la clé personnelle peut être décryptée par une clé d'un utilisateur détenteur des données pour obtenir la clé de stockage et la clé de données peut être décryptée par les données non cryptées pour obtenir la clé de stockage;
un module de stockage (1002), conçu pour la sauvegarde des données cryptées, de la clé personnelle, de la clé de données et de la valeur HASH des données;
un module de jugement (1003), conçu pour recevoir la valeur HASH des données d'un nouvel utilisateur et déterminer si les données du nouvel utilisateur ont la même valeur HASH que l'une des données stockées, avant de stocker les données du nouvel utilisateur;
un module d'autorisation de clé (1004), conçu pour décrypter la clé de données des données doubles pour obtenir la clé de stockage lorsque le résultat du module de jugement (1003) est positif et crypter la clé de stockage avec une clé publique du nouvel utilisateur afin de générer la clé personnelle du nouvel utilisateur;

12. L'appareil selon la revendication 11, dans lequel le module d'autorisation de clé (1004) comprend:
un sous-module récepteur (1042), conçu pour recevoir une clé personnelle du nouvel utilisateur par le client et envoyer la clé personnelle au module de stockage module (1002) pour stockage; ou
dans lequel le module d'autorisation de clé (1004) comprend:
un sous-module récepteur de clé de décryptage (1043), conçu pour recevoir du client la clé de décryptage de la clé de données, dont le calcul est basé sur les données elles-mêmes et l'algorithme prédéterminé;
un sous-module de cryptage/décryptage (1044), conçu pour décrypter la clé de données avec la clé de décryptage téléversée par le client afin d'obtenir la clé de stockage et crypter la clé de stockage avec la clé publique du nouvel utilisateur afin de générer une clé personnelle du nouvel utilisateur.
